# EUROPEAN PATENT APPLICATION

(11) **EP 4 015 391 A1**
(43) Date of publication of application: **22.06.2022**
(21) Application number: 21210047.3
(22) Date of filing: 23.11.2021
(51) Int. Cl.: B64D 13/06

(54) **ELECTRIC COMPRESSOR WITH POWER GENERATING TURBINE THAT RECYCLES ENGINE AIR**

(30) Priority: 18.12.2020 US 202017126887
(71) Applicant: Hamilton Sundstrand Corporation, Charlotte, NC 28217-4578 (US)
(72) Inventor: LEAPER, Gregory R., South Windsor, 06074 (US); ERNST, Jeffrey, Wethersfield, 06109 (US)
(74) Representative: Dehns

(57) **Abstract**

An environmental control system (20) includes a first inlet (22) for providing a first medium (A1) from a first source, a second inlet (26) for providing a second medium (A2) from a second source, distinct from the first source, an outlet for receiving a conditioned form of at least one of the first medium and the second medium, and a compression device (40) including a compressor (42) connected to an electric motor by a first shaft (46). The compressor is arranged in fluid communication with the first inlet and is only driven by the electric motor. An expansion device (50) including a turbine (52) is rotatable about a second shaft distinct from the first shaft. The turbine is arranged in fluid communication with the second inlet.

## Description

### BACKGROUND

Embodiments of the disclosure relate to environmental control systems, and more specifically to an environmental control system of an aircraft.

Aircraft need to have their internal environment controlled. In general, contemporary air conditioning systems are supplied a pressure at cruise that is approximately 30 psig to 35 psig. The trend in the aerospace industry today is towards systems with higher efficiency. One approach to improve efficiency of an aircraft environmental control system is to eliminate the bleed air entirely and use electrical power to compress outside air. A second approach is to use lower engine pressure. The third approach is to use the energy in the cabin outflow air to compress outside air and bring it into the cabin. Each of these approaches provides a reduction in airplane fuel burn.

### BRIEF DESCRIPTION

According to an embodiment, an environmental control system includes a first inlet for providing a first medium from a first source, a second inlet for providing a second medium from a second source, distinct from the first source, an outlet for receiving a conditioned form of at least one of the first medium and the second medium, and a compression device including a compressor connected to an electric motor by a first shaft. The compressor is arranged in fluid communication with the first inlet and is only driven by the electric motor. An expansion device including a turbine is rotatable about a second shaft distinct from the first shaft. The turbine is arranged in fluid communication with the second inlet.

In addition to one or more of the features described above, or as an alternative, in further embodiments comprising a generator operably coupled to the turbine, wherein operation of the turbine creates energy at the generator.

In addition to one or more of the features described above, or as an alternative, in further embodiments the generator is operably coupled to the electric motor such that the energy from the generator is used to power the electric motor.

In addition to one or more of the features described above, or as an alternative, in further embodiments comprising a battery operably coupled to the generator, wherein the energy from the generator may be stored within the battery.

In addition to one or more of the features described above, or as an alternative, in further embodiments at least one of a temperature and pressure of the first medium provided to the compression device is generally equal to the temperature and pressure of the first medium at the first inlet.

In addition to one or more of the features described above, or as an alternative, in further embodiments the environmental control system is used in a vehicle and the first medium is fresh air provided from outside the vehicle.

In addition to one or more of the features described above, or as an alternative, in further embodiments at least one of a temperature and pressure of the second medium provided to the expansion device is generally equal to the temperature and pressure of the second medium at the second inlet.

In addition to one or more of the features described above, or as an alternative, in further embodiments the second medium is bleed air.

In addition to one or more of the features described above, or as an alternative, in further embodiments comprising a bleed air system arranged between the second source and the expansion device relative to a flow of the second medium.

In addition to one or more of the features described above, or as an alternative, in further embodiments comprising a heat exchanger arranged in fluid communication with the compression device and the expansion device.

In addition to one or more of the features described above, or as an alternative, in further embodiments within the heat exchanger, the first medium output from the compression device is cooled by the second medium.

In addition to one or more of the features described above, or as an alternative, in further embodiments the heat exchanger is fluidly connected to the second source such that the second medium output from the heat exchanger is returned to the second source.

In addition to one or more of the features described above, or as an alternative, in further embodiments comprising a third inlet for receiving a third medium, the third inlet being fluidly connected to the compression device.

In addition to one or more of the features described above, or as an alternative, in further embodiments the third medium is configured to cool the electric motor.

In addition to one or more of the features described above, or as an alternative, in further embodiments the third medium is cabin discharge air.

In addition to one or more of the features described above, or as an alternative, in further embodiments the turbine of the expansion device is sized to utilize all available power of the second medium.

In addition to one or more of the features described above, or as an alternative, in further embodiments the first shaft of the compression device is at least one of vertically and horizontally offset from the second shaft of the expansion device.

In addition to one or more of the features described above, or as an alternative, in further embodiments the conditioned form of only the first medium is provided to the outlet.

In addition to one or more of the features described above, or as an alternative, in further embodiments the environmental control system is used on a vehicle and the vehicle is an aircraft.

### BRIEF DESCRIPTION OF THE DRAWINGS

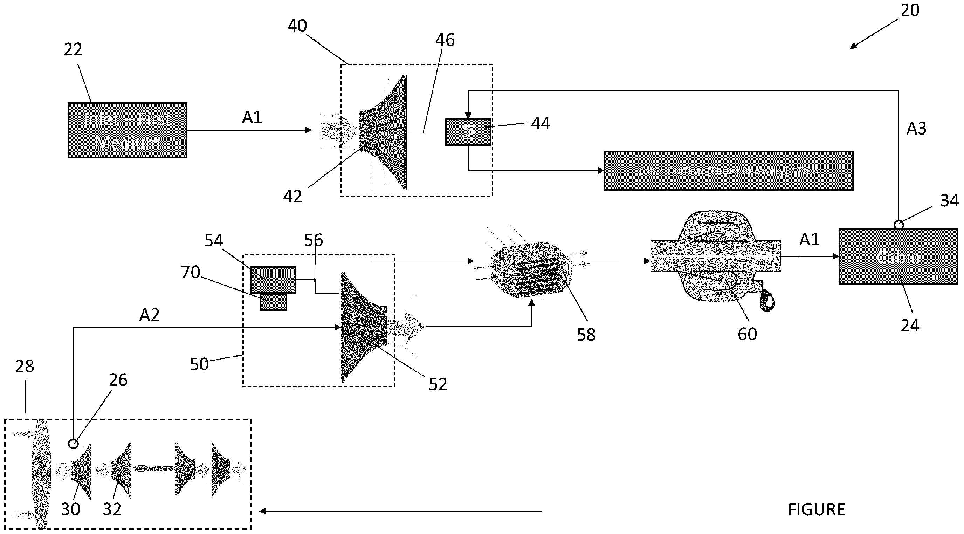

The following descriptions should not be considered limiting in any way. With reference to the accompanying drawing, like elements are numbered alike:

The Figure is a simplified schematic of an environmental control system of a vehicle according to another embodiment.

### DETAILED DESCRIPTION

A detailed description of one or more embodiments of the disclosed apparatus and method are presented herein by way of exemplification and not limitation with reference to the Figure.

Embodiments herein provide an environmental control system of an aircraft that uses mediums from different sources to power the environmental control system and to provide cabin pressurization and cooling at a high fuel burn efficiency. The medium can generally be air, while other examples include gases, liquids, fluidized solids, or slurries.

With reference now to the Figure, a schematic diagram of a portion of an environment control system (ECS) 20, such as an air conditioning unit or pack for example, is depicted according to non-limiting embodiments. Although the environmental control system 20 is described with reference to an aircraft, alternative applications, such as within another vehicle for example, are also within the scope of the disclosure. As shown in the Figure, the system 20 can receive a first medium A1 at a first inlet 22 and provides a conditioned form of the first medium A1 to a volume 24. In an embodiment, the first medium A1 is fresh air, such as outside air for example. The outside air can be procured via one or more scooping mechanisms, such as an impact scoop or a flush scoop for example. Thus, the inlet 22 can be considered a fresh or outside air inlet. Generally, the first medium A1 described herein is at a temperature equal to a temperature of the air outside of the aircraft. Further, a pressure of the first medium at the inlet 22 is an ambient pressure equal to an air pressure outside of the aircraft when the aircraft is on the ground and between an ambient pressure and a cabin pressure when the aircraft is in flight.

The system 20 may additionally be configured to receive a second medium A2 at a second inlet 26. In embodiments where the environmental control system 20 is used in an aircraft application, the second medium A2 is bleed air, which is pressurized air originating from, i.e. being "bled" from an engine or auxiliary power unit 28 of the aircraft. It shall be understood that one or more of the temperature, humidity, and pressure of the bleed air can vary based upon the compressor stage and revolutions per minute of the engine or auxiliary power unit from which the air is drawn. Although the inlet 26 is illustrated in the FIG. as being adjacent the low stage compressor 30 of the engine 28, embodiments where the inlet 26 is configured to draw air having a higher temperature and/or pressure, such as from the high stage compressor 32 for example, are also contemplated herein. Further, it should be understood that embodiments where a bleed air system including one or more of a compressor, turbine, and precooler may be arranged between the inlet 26 and the expansion device 50.

The system 20 can further receive a third medium A3 at an inlet 34. In one embodiment, the inlet 34 is operably coupled to a volume 24, such as the cabin of an aircraft, and the third medium A3 is cabin discharge air, which is air leaving the volume 24 and that would typically be discharged overboard. In this manner, the pressurized air from the volume 24 can be utilized by the system 20 to achieve certain operations.

The system 20 additionally includes a compression device 40. In the illustrated, non-limiting embodiment, the compression device 40 is a mechanical device that includes components for performing thermodynamic work on a medium (e.g., extracts work from or applies work to the first medium A1, the second medium A2, and/or the third medium A3 by raising and/or lowering pressure and by raising and/or lowering temperature). In the non-limiting embodiment, the compression device 40 includes a compressor 42. The compressor 42 is a mechanical device configured to raise a pressure of a medium and can be driven by another mechanical device (e.g., a motor or a medium via a turbine). Examples of compressor types include centrifugal, diagonal or mixed-flow, axial-flow, reciprocating, ionic liquid piston, rotary screw, rotary vane, scroll, diaphragm, air bubble, etc. As shown, the compressor 42 is configured to receive and pressurize the second medium A1.

In addition, the compression device includes a source 44 for driving the compressor 42. The compressor 42 is mechanically connected to and is therefore driven by the source 44 in order to compress the first medium A1. In the illustrated, non-limiting embodiment, the source 44 is a motor powered by electricity from the aircraft. In such embodiments, a flow of the third medium A3 may be configured to pass through and/or around a portion of the motor 44 to cool the motor during operation thereof. Accordingly, the third medium A3 may only be provided to the system when the motor 44 is operational. It should be understood that embodiments where the source 44 is another component capable of extracting energy to drive the compressor 42 from the third medium, such as a turbine for example, is also within the scope of the disclosure.

As shown, the system 20 may additionally include an expansion device 50. The expansion device 50 is a mechanical device, similar to the compression device 40, and includes components for performing thermodynamic work on a medium (e.g., extracts work from or applies work to the first medium A1 by raising and/or lowering pressure and by raising and/or lowering temperature). In the illustrated, non-limiting embodiment, the expansion device 50 is a two-wheel air cycle machine including a turbine 52 and an electric generator 54 mechanically coupled via a shaft 56. However, it should be understood that any suitable expansion device, including an air cycle machine having any number of wheels are also within the scope of the disclosure. The turbine 52 is a mechanical device that expands a medium and extracts work therefrom. In the expansion device 50, the rotation of the turbine 52 in turn drives the shaft 56 and the generator 54.

The system 20 additionally includes a dehumidification system. In the illustrated, non-limiting embodiment of the Figure, the dehumidification system includes a condenser 58, and a water extractor or separator 60 arranged in series. The condenser 58 and the water extractor 60 may be arranged in fluid communication with the first medium A1. The condenser 58 is a particular type of heat exchanger. The water extractor 60 is a mechanical device that performs a process of removing water from a medium.

The elements of the system 20 are connected via valves, tubes, pipes, and the like. Valves (e.g., flow regulation device or mass flow valve) are devices that regulate, direct, and/or control a flow of a medium by opening, closing, or partially obstructing various passageways within the tubes, pipes, etc. of the system. Valves can be operated by actuators, such that flow rates of the medium in any portion of the system 20 can be regulated to a desired value.

During operation of the aircraft, the second medium A2 is provided to the environmental control system 20 from the engine via inlet 26. In an embodiment, the second medium is provided directly to the expansion device 50, and more specifically to an inlet of the turbine 52. As a result, the temperature and pressure of the second medium A2 provided to the turbine 52 is substantially identical to the temperature and pressure of the second medium A2 at the inlet 26. It should be understood that "substantially identical" as used herein is intended to include the minimal losses that occur as a fluid flows over an extended distance through a conduit. Within the turbine 52, the second medium A2 is expanded and work is extracted therefrom. The work extracted by the turbine 52 is used to drive the generator 54 via shaft 56, thereby creating electrical power. The cooler, lower pressure second medium A2 output from the turbine 52 is then provided to the heat exchanger 58, where the second medium A2 is heated before being returned to the engine 28 or provided to another system of the aircraft, such as a deicing system. Alternatively, the second medium A2 output from the heat exchanger 58 may be exhausted overboard.

The electric power generated within the generator 54 may be supplied to one or more of the electrical systems onboard the aircraft using any suitable system known in the art. For example, in an embodiment, at least a portion of the electric power from the generator may be supplied to the motor 44 to operate the compressor 42. Alternatively, or in addition, the power from the generator may be stored within one or more batteries, illustrated schematically at 70, and distributed to one or more systems of the aircraft

At the same time that the second medium is being provided to the environmental control system 20 via inlet 26, the first medium A1 is also provided to the environmental control system 20 via inlet 22. In an embodiment, the first medium A1 is provided directly to the compression device 40, and more specifically to an inlet of the compressor 42. The motor is utilized to turn the compressor, and as a result, the at least one of the temperature and the pressure of the first medium A1 within the compressor is increased. As previously described, a flow of the third medium forms a liquid cooling system used to cool the electric motor. The heated third medium output from the motor may be used as a thrust recovery source, for example provided to a portion of the gas turbine engine, or alternatively, may be used as a trim source.

The first medium A1 exhausted from an outlet of the compressor 42 is then provided to the condensing heat exchanger 58. Within the heat exchanger 58, the first medium A1 is cooled by the flow of second medium A2 output from the turbine 52. The first medium A1 is cooled such that the moisture within the flow of first medium A1 condenses and is subsequently removed from the flow within the water extractor 60. The dehumidified air exits the water extractor and is provided to the one or more loads of the aircraft, such as the cabin 24 for example.

The environmental control system 20 described herein provides a simplified system for cabin cooling while reducing the amount of wasted engine bleed air. To minimize the wasted engine bleed air, the turbine 52 may be sized to utilize all of the available power of the second medium A2. For example, the turbine 52 may be sized to provide a desired amount of cooling with a minimal reduction in the pressure of the second medium A2. In addition, by separating the compressor 42 and the turbine 52, the turbine 52 is able to run at any speed and will not affect operation of the compressor 42.

The term "about" is intended to include the degree of error associated with measurement of the particular quantity based upon the equipment available at the time of filing the application.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. An environmental control system (20) comprising:
a first inlet (22) for providing a first medium (A1) from a first source;
a second inlet (26) for providing a second medium (A2) from a second source, distinct from the first source;
an outlet for receiving a conditioned form of at least one of the first medium and the second medium;
a compression device (40) including a compressor (42) connected to an electric motor by a first shaft (46), wherein the compressor is arranged in fluid communication with the first inlet and is only driven by the electric motor;
an expansion device (50) including a turbine (52) rotatable about a second shaft (56), the second shaft being distinct from the first shaft, wherein the turbine is arranged in fluid communication with the second inlet.

2. The environmental control system of claim 1, further comprising a generator (54) operably coupled to the turbine, wherein operation of the turbine creates energy at the generator.

3. The environmental control system of claim 2, wherein the generator is operably coupled to the electric motor such that the energy from the generator is used to power the electric motor; and/or further comprising a battery operably coupled to the generator, wherein the energy from the generator may be stored within the battery.

4. The environmental control system of any preceding claim, wherein at least one of a temperature and pressure of the first medium provided to the compression device is generally equal to the temperature and pressure of the first medium at the first inlet.

5. The environmental control system of any preceding claim, wherein the environmental control system is used in a vehicle and the first medium is fresh air provided from outside the vehicle.

6. The environmental control system of any preceding claim, wherein at least one of a temperature and pressure of the second medium provided to the expansion device is generally equal to the temperature and pressure of the second medium at the second inlet.

7. The environmental control system of any preceding claim, wherein the second medium is bleed air; optionally further comprising a bleed air system arranged between the second source and the expansion device relative to a flow of the second medium.

8. The environmental control system of any preceding claim, further comprising a heat exchanger (58) arranged in fluid communication with the compression device and the expansion device.

9. The environmental control system of claim 9, wherein within the heat exchanger, the first medium output from the compression device is cooled by the second medium; and/or wherein the heat exchanger is fluidly connected to the second source such that the second medium output from the heat exchanger is returned to the second source.

10. The environmental control system of any preceding claim, further comprising a third inlet (34) for receiving a third medium, the third inlet being fluidly connected to the compression device.

11. The environmental control system of claim 10, wherein the third medium is configured to cool the electric motor; and/or wherein the third medium is cabin discharge air.

12. The environmental control system of any preceding claim, wherein the turbine of the expansion device is sized to utilize all available power of the second medium.

13. The environmental control system of any preceding claim, wherein the first shaft of the compression device is at least one of vertically and horizontally offset from the second shaft of the expansion device.

14. The environmental control system of any preceding claim, wherein the conditioned form of only the first medium is provided to the outlet.

15. The environmental control system of any preceding claim, wherein the environmental control system is used on a vehicle and the vehicle is an aircraft.
